(19) Europäisches Patentamt
European Patent Office
Office européen des brevets

(11) Veröffentlichungsnummer : **0 171 730**
**B1**

(12) **EUROPÄISCHE PATENTSCHRIFT**

(45) Veröffentlichungstag der Patentschrift : **11.01.89**

(51) Int. Cl.⁴ : **C 08 L 25/04**, C 08 K 5/53

(21) Anmeldenummer : **85109818.6**

(22) Anmeldetag : **05.08.85**

(54) **Schwer entflammbare Formmassen auf Basis von Styrolpolymerisaten.**

(30) Priorität : **17.08.84 DE 3430286**

(43) Veröffentlichungstag der Anmeldung : **19.02.86 Patentblatt 86/08**

(45) Bekanntmachung des Hinweises auf die Patenterteilung : **11.01.89 Patentblatt 89/02**

(84) Benannte Vertragsstaaten : **BE DE FR GB IT NL**

(56) Entgegenhaltungen :
**DE-A- 2 447 726**
**DE-A- 2 459 685**
**DE-A- 2 800 891**
**H. VOGEL: "Flammfestmachen von Kunststoffen" 1966, Dr. A. Hüthig Verlag, Heidelberg**

(73) Patentinhaber : **BAYER AG**
**Konzernverwaltung RP Patentabteilung**
**D-5090 Leverkusen 1 Bayerwerk (DE)**

(72) Erfinder : **Kauth, Hermann, Dr.**
**Kolpingstrasse 34**
**D-4150 Krefeld 11 (DE)**
Erfinder : **Bosshammer, Hubert**
**Klosterstrasse 112**
**D-5000 Köln 41 (DE)**
Erfinder : **Schmidt, Manfred, Dr.**
**Erich-Klausener-Strasse 37**
**D-4150 Krefeld (DE)**
Erfinder : **Freitag, Dieter, Dr.**
**Hasenheide 10**
**D-4150 Krefeld 1 (DE)**

**EP 0 171 730 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft schwer entflammbare Formmassen aus Mischungen von Styrolpolymerisaten, halogenhaltigen organischen Verbindungen, Polyphosphonsäureamiden und gegebenfalls üblichen Zusatzstoffen.

Zur Brandschutzausrüstung von Styrolpolymerisaten wurden bereits zahlreiche Komponenten erprobt und beschrieben. Besonders bewährt haben sich hierbei Kombinationen aus einer aromatischen Halogenverbindung und Antimontrioxid als Synergist. Solche Kombinationen werden beschrieben zum Beispiel in J. Troitzsch, Brandverhalten von Kunststoffen, C. Hanser Verlag München, Wien 1982 und W. C. Kuryla, A. J. Papa, Flame Retardancy of Polymeric Materials, M. Dekker Inc. New York, 1973.

Besonders Kombinationen aus Bromverbindungen und Antimontrioxid zeigen gute Flammwidrigkeit. Antimontrioxid wurde jedoch in die Reihe der im Tierversuch cancerogenen Verbindungen eingeordnet (vgl. hierzu Maximale Arbeitskonzentration und biologische Arbeitsstofftoleranzwerte 1983 Mitteilung XIX der Senatskommission zur Prüfung gesundheitsschädlicher Arbeitsstoffe, Verlag Chemie). Damit war die Aufgabe gegeben, solche flammhemmenden Additive zu finden, die in Styrolpolymerisaten bei Antimontrioxid-Freiheit eine gute Brandwidrigkeit bewirken.

Gegenstand der vorliegenden Erfindung sind daher schwer entflammbare Formmassen aus Mischungen von

a) 50 bis 90 Gew.-Teilen Styrolpolymerisat,

b) 10 bis 50 Gew.-Teilen Flammschutzzusatz, die Summe aus a) und b) ist 100, und gegebenenfalls

c) üblichen Zusatzstoffen in üblichen Mengen, dadurch gekennzeichnet, daß die 10 bis 50 Gew.-Teile Flammschutzzusatz bestehen aus

$b_1$) 5 bis 30 Gew.-Teilen mindestens eines mindestens 4-C-Atome und 30 Gew.-% Chlor und/oder mindestens 4-C-Atome und 40 Gew.-% Brom enthaltenden organischen, üblichen Flammschutzmittels und

$b_2$) 5 bis 20 Gew.-Teilen mindestens eines Polyphosphonsäureamids mit den wiederkekhrenden Struktureinheiten der Formel I

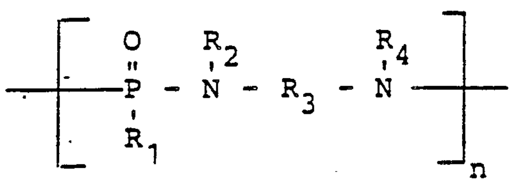

(I)

worin

$R_1$ = $C_1$-$C_6$-Alkyl, $C_6$-$C_{15}$-Aryl, $C_2$-$C_{12}$-Alkenyl, $C_7$-$C_{18}$-Alkylaryl, $C_7$-$C_{18}$-Aralkyl,

$R_3$ = einen oder mehrere Reste, ausgewählt aus $C_2$-$C_{12}$-Alkylen ;

Phenylen 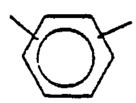

Bisphenylen 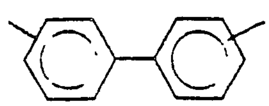

Alkylen-bisphenylen 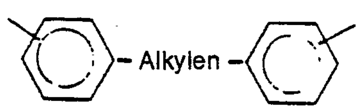 mit

Alkylen = $C_1$-$C_4$-Alkylen,
$C_2$-$C_4$-Alkyliden,
$C_5$-$C_{12}$-Cycloalkylen oder
$C_6$-$C_{12}$-Cycloalkyliden ;Thiobisphenylen

Thiobisphenylen 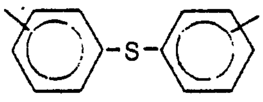

Oxybisphenylen

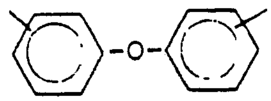

Sulfonyl-bisphenylen

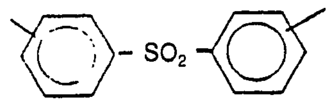

Carbonyl-bisphenylen

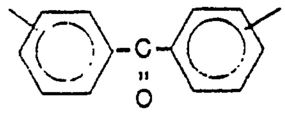

Bis(alkylen)-phenylen, Alkylen

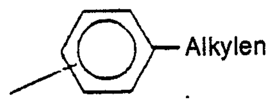

mit 1 bis C-Atomen in jeder Alkylengruppe, wobei jeder der Phenylkerne der $R_1$- und $R_3$-Reste durch 1 bis 4 $C_1$-$C_4$-Alkylgruppen, oder 1 bis 4 Halogenatome (Cl, Br) oder durch die genannten Alkylgruppen und Halogenatome substituiert sein kann,

$R_2 = R_4$ = Wasserstoff oder $C_1$-$C_4$-Alkyl bzw.

$R_2$ und $R_4$ zusammen eine die beiden Stickstoffatome verbindende Alkylengruppe mit 1 bis 6 C-Atomen, wobei dann $R_3$ auf Alkylen mit 2 bis 6 C-Atome beschränkt ist und

n eine Zahl von 3 bis 20 bedeuten ; die Summe Der Gewichtsteile aus $b_1$ und $b_2$ ist stets eine Zahl von 10 bis 50.

Vorzugsweise bedeuten in Formel (I)

$R_1$ = Methyl oder Phenyl, insbesondere Methyl ;

$R_2$ und $R_4$ = Wasserstoff, bzw. $R_2$ und $R_4$ zusammen eine $-CH_2-CH_2$-Gruppe, wobei dann $R_3$ auf eine $CH_2-CH_2$-Gruppe beschränkt ist ;

$R_3$ mindestens einen der Reste

Phenylen

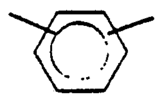

Alkylenbisphenylen

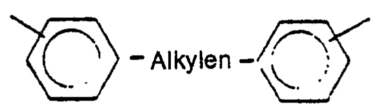

mit Alkylen = $C_1$-$C_4$-Alkylen, insbesondere $C_1$-$C_2$-Alkylen und

Xylylen

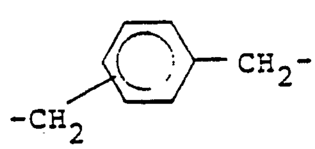

wobei jeder Phenylkern von $R_1$ und $R_3$ durch 1 bis 2 Methylreste substituiert sein kann und

n eine Zahl von 3 bis 15.

Verwendet man anstelle der erfindungsgemäß einzusetzenden Polyphosphonsäureamide Phosphorsäureester wie z. B. Triphenylphosphat, Diphenylkresylphosphat o. ä., so findet man neben einer deutlich erniedrigten Wärmestandfestigkeit keine ausreichende Flammschutzwirkung mehr.

Unter Styrolpolymerisaten werden Homo- und Copolymerisate und Pfropfcopolymerisate des Styrols sowie der kern- und seitenketten-alkylierten Styrole mit 1 bis 3 C-Atomen in der Alkylgruppe, vorzugsweise Methyl, wie z. B. α-Methylstyrol, o-, m- und p-Methylstyrol und p-Isopropylstyrol verstanden. Bevorzugt ist das Styrol selbst.

Als Comonomere, die für die Copolymerisation und Pfropfcopolymerisation im Gemisch mit Styrol eingesetzt werden können, kommen in Frage : (Meth)Acrylnitril, vorzugsweise Acrylnitril, (Meth)Acrylsäureester mit 1 bis 8 C-Atomen, vorzugsweise mit 1 bis 4 C-Atomen in der Alkoholkomponente und Alkylstyrole mit 1 bis 3 C-Atomen in der Alkylgruppe (kern- und seitenkettensubstituiert), vorzugsweise durch Methyl in der Seitenkette und im Kern substituiertes Styrol.

Im Falle der Pfropfcopolymerisate können 5 bis 90 Gew.-%, bevorzugt 5 bis 70 Gew.-% auf die Pfropfgrundlage und 95 bis 10 Gew.-%, bevorzugt 95 bis 30 Gew.-%, auf die aufgepfropften Monomeren entfallen. Die erfindungsgemäß eingesetzten Pfropfcopolymerisate sind bekannt bzw. ihre Herstellungmethode kann es sich bei dem Pfropfpolymerisaten um reine Pfropfcopolymerisate oder um Gemische aus Pfropfcopolymerisat und Homo- bzw. Copolymerisat der zur Pfropfung verwendeten Monomern handeln (vgl. « Methoden der Organischen Chemie » (Houben-Weyl), Bd. 14/1, Georg Thieme Verlag, Stuttgart 1961, S. 112-115 und S. 393-406).

Als Pfropfgrundlage kommt insbesondere Polybutadien in Frage, ferner Polymerisate mit kautschukelastischen Eigenschaften, die im wesentlichen aus einem oder mehreren der folgenden Monomeren erhältlich sind : Chloropren, Butadien-1,3, Isopren, Styrol, Acrylnitril, Vinylacetat, Vinylalkylether mit 1 bis 6 C-Atomen in der Alkylgruppe und (Meth-) Acrylsäureester mit 1 bis 18 C-Atomen in der Alkoholkomponente, also Polymerisate, wie sie z. B. in « Methoden der Organischen Chemie » (Houben-Weyl), Bd. 14/1, Georg Thieme Verlag, Stuttgart 1961, S ; 393-406 und in C. B. Bucknall, « Toughened Plastics », Appl. Science Publishers, London 1977, beschrieben sind. Bevorzugte Pfropfpolymerisate C sind mindestens partiell vernetzt und besitzen Gelgehalte von über 20, vorzugsweise über 40 Gew.-%, insbesondere über 60 Gew.-% (vgl. auch DE-OS 16 94 173 = US-PS 3 564 077 und DE-OS 23 48 377 = US-PS 3 919 353).

Als Flammschutzzusatz kommen mindestens 4 C-Atome und 30 Gew.-% Chlor und/oder mindestens 4 C-Atome und 40 Gew.-% Brom enthaltende organische Verbindungen in Frage, die bei den Verarbeitungstemperaturen der Formmassen von ca. 200 bis 250° eine ausreichend niedrige Flüchtigkeit besitzen und ausreichend thermisch stabil sind. Derartige Verbindungen sind als übliche Flammschutzmittel hinreichend bekannt und beispielsweise beschrieben in W. C. Kuryla, A. J. Papa ; Flame Retardancy of Polymeric Materials, M. Dekker Inc. New York 1973.

Besonders seien hervorgehoben :

Decabromdiphenyl, Decabromdiphenylether, Nonabromdiphenyl, Nonabromdiphenylether, Octabromdiphenyl, Octabromdiphenylether, Pentabromdiphenylether, Hexabrombenzol, Tetrabrombisphenol A, Tetrabrombisphenol A-Oligocarbonat mit einem Polymerisationsgrad von 3 bis 15, vorzugsweise 3 bis 10, halogenierte Phthalsäurederivate wie Tetrabrom(chlor)phthalsäureimid, N-Alkyl-tetrabrom(chlor)phthalsäureimide mit 1 bis 4 C-Atomen in der Alkylgruppe, N,N'-Bis[tetrabrom(chlor)phthalimido]-alkane mit 2 bis 6 C-Atomen in der Alkankette.

Ganz besonders bevorzugt sind bromierte Diphenylether.

Unter üblichen Zusatzstoffen werden beispielsweise Formtrennmittel, Gleitmittel, thermische Stabilisatoren, Ultraviolettlichtstabilisatoren verstanden, die in üblichen Mengen (ca. 0,1 bis 10 Gew.-%, bezogen auf Komponenten a + b) eingesetzt werden. Ferner sind übliche Zusatzstoffe, Pigmente, Füllstoffe und verstärkende Füllstoffe wie Glasfasern, Glasgewebe, Kohlenstoffasern, Titanwhisker usw. in üblichen Mengen, d. h. bis 50 Gew.-%, bezogen auf Komponenten a + b, eingesetzt.

Die Herstellung der Polyphosphonsäureamide kann nach dem Verfahren der DE-OS 33 42 637 erfolgen. Danach werden Polyphosphonsäureamide der Formel I so hergestellt, daß man Diamine der Formel II

$$\overset{R_2}{\underset{}{HN}} - R_3 - \overset{R_4}{NH} \qquad (II)$$

und Phosphonsäureester der Formel III

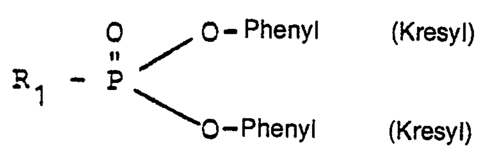

(III)

worin die Substituenten $R_1$, $R_2$, $R_3$ und $R_4$ die für Formel I angegebene Bedeutung haben, in der Schmelze bei 50 bis 350 °C unter Abdestillieren des abgespaltenen Phenols bzw. Kresols kondensiert, wobei pro Mol des Diamins der Formel II 0,5 bis 2 Mol des Phosphorsäureesters der Formel III eingesetzt werden und wobei man gegebenenfalls in sauerstofffreier Inertgasatmosphäre und gegebenenfalls in Gegenwart von $10^{-5}$ bis $10^{-1}$ Mol-%, bezogen auf 100 Mol-% Diamin, eines die Kondensation beschleunigenden Katalysators wie Natriumhydrid, Natriumamid, Natriumalkoholate, Titantetrabutylat, p-Toluolsulfonsäure und andere arbeitet.

Zur Herstellung der erfindungsgemäßen Formmassen werden Styrolpolymerisat, der Flammschutzzusatz und gegebenenfalls die üblichen Zusatzstoffe mittels einer geeigneten Vorrichtung wie z. B. eines

Mischwalzwerkes oder eines Extruders bei Temperaturen von 200 °C bis 250 °C vermischt und dann auf einer üblichen Verarbeitungsmaschine zu Formkörpern verarbeitet.

Die Prüfung des Verhaltens bei Schlagbeanspruchung erfolgte an Normteststäben durch Messung der Schlagzähigkeit $a_n$ und der Kerbschlagzähigkeit $a_k$, beide gemäß DIN 53 453.

Die Prüfung des Brandverhaltens erfolgte sowohl durch Messung des $O_2$-Index gemäß ASTM D 2863-70 als auch durch Messung der Nachbrennzeit gemäß dem UL-Test (Subj. 94).

Hierbei werden im Spritzgußverfahren bei 200 bis 220 °C Teststäbe mit den Abmessungen :
127 × 12,7 × 2,5 mm bzw ;
127 × 12,7 × 3,2 mm ausgeformt.

Die Teststäbe wurden dem Testverfahren gemäß Underwriters Laboratories, Inc. Bulletin 94, Verbrennungstest zur Klassifizierung von Materialien, unterworfen.

Gemäß diesem Testverfahren wurden die so geprüften Materialien entweder mit UL-94 V-O, UL-94 V-I und UL-94 V-II klassifiziert, und zwar auf der Basis der mit den 10 Proben erhaltenen Ergebnisse. Die Kriterien für jede dieser V-Klassifizierung gemäß UL-94 sind kurz wie folgt :

UL-94 V-O Das durchschnittliche Flammen und/oder Glühen nach Entfernung der Zündflamme soll 5 Sekunden nicht überschreiten und keine der Proben soll Teilchen abtropfen lassen, die absorbierende Baumwolle entzünden.

UL-94 V-I Das durchschnittliche Flammen und/oder Glühen nach Entfernung der Zündflamme soll 25 Sekunden nicht überschreiten und keine der Proben soll Teilchen abtropfen lassen, die absorbierende Baumwolle entzünden.

UL-94 V-II Das durchschnittliche Flammen und/oder Glühen nach Entfernung der Zündflamme soll 25 Sekunden nicht überschreiten und die Proben lassen flammende Teilchen abtropfen, welche absorbierende Baumwolle entzünden.

Weiterhin wurde ein Teststab, der mehr als 25 Sekunden nach Entfernung der Zündflamme brannte, nicht nach UL-94 klassifiziert, sondern nach den Standardbedingungen der vorliegenden Erfindung als « brennt » bezeichnet. Die Vorschrift UL-94 erfordert weiterhin, daß alle Teststäße eines Versuchs die jeweilige V-Bewertung erfüllen müssen, anderenfalls erhalten die 10 Teststäbe die Bewertung des schlechtesten Einzelstabes. Wenn beispielsweise 1 Stab mit UL-94 V-II bewertet wird und die anderen 9 Teststäbe mit UL-94 V-O bewertet werden, dann erhalten alle 10 Stäbe die Bewertung UL-94 V-II.

Die in den Beispielen angegebenen Teile und Prozente beziehen sich auf das Gewicht, sofern nicht anders vermerkt.

Experimenteller Teil

Herstellung der eingesetzten Polyphosphorsäureamide

1. Polyphosphorsäureamid mit wiederkehrenden Einheiten der Formel A

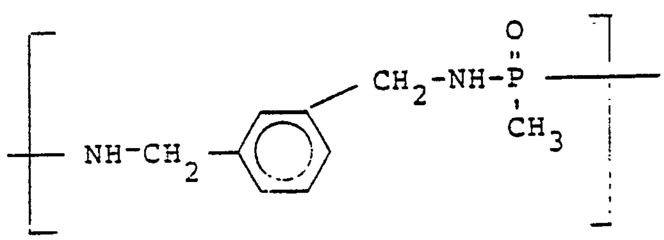

(A)

7440 g (30 Mol) Methanphosphonsäurediphenylester
4080 g (30 Mol) m-Xylylendiamin und
0,3 g ($7{,}7 \cdot 10^{-3}$ Mol) Natriumamid

werden unter Stickstoff bei 220 °C intensiv in einem Autoklaven vermischt. Man rührt bei dieser Temperatur 2 h unter Normaldruck und destilliert dann bei einem von 350 auf mbar absinkenden Vakuum und einer auf 240 °C ansteigenden Temperatur Phenol über eine auf 130 °C beheizte Kolonne während 3 h ab. Anschließend wird die Reaktion 4 h bei 240 °C und einem allmählich auf ~ 1 mbar sinkendem Druck fortgesetzt. Man belüftet mit Stickstoff, läßt das Produkt absitzen und isoliert es durch Ablassen und Zerkleinerung über eine Kühlwalze. Das Polyphosphonsäureamid ist löslich in Methanol, Kresol, Eisessig und Dimethylsulfoxid, dagegen unlöslich in Methylenchlorid und besitzt folgende Eigenschaften :

Viskosität $\eta_{rel}$ = 1,14 (1 g Substanz pro 100 ml Lösung ; Lösungsmittel m-Kresol)
Glasübergangstemperatur $T_g$ = 78 °C
Durchschnittliches Molekulargewicht (Zahlenmittel) $\overline{MG}_{osm}$ = 1500
Ausbeute : 5700 g.

2. Polyphosphorsäureamid mit wiederkehrenden Einheiten der Formel B

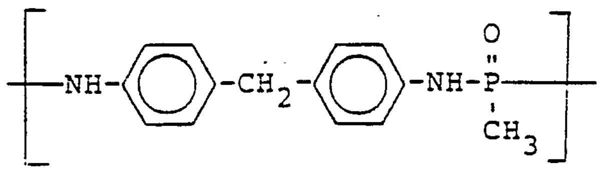

(B)

Zu 248 g (1 Mol) Methanphosphonsäurediphenylester werden während einer Stunde 99 g (0,5 Mol) 4,4'-Diaminodiphenylmethan bei 240 °C und 150 mbar zugetropft. Die Reaktion wird mit 50 mg $NaNH_2$ katalysiert. Während des Zutropfens wird Phenol über eine Kolonne abdestilliert. Danach wird die Reaktion 6 h bei einer Temperatur von 240 °C und einem auf ca. 1 mbar absinkenden Vakuum fortgesetzt. Man entfernt die Kolonne, und destilliert nicht umgesetzten Ausgangsester ab, und erhält 185 g eines Oligomers mit folgenden Eigenschaften :

Aminoendgruppen : 0,3 %

Viskosität $\eta_{rel}$ = 1.1 (1 g Substanz pro 100 ml Lösung, Lösungsmittel : m-Kresol)

Glasübergangstemperatur $T_g$ = 120°C

Durchschnittliches Molekulargewicht (Zahlenmittel) $\overline{MG}_{osm.}$ = 950

Das in den Tabellen 1 und 2 aufgeführte Styrolpolymerisat ABS ist handelsübliches Pfropfcopolymerisat, das aus 10 % Polybutadienkautschuk als Pfropfgrundlage und 60 % aufgepfropften Styrol-sowie 30 % aufgepfropften Acrylnitrileinheiten besteht.

Unter dem Styrolpolymerisat ASA wird ein handelsübliches Pfropfcopolymerisat verstanden, das aus 20 % Polyacrylsäurebutylester als Pfropfgrundlage und aufgepfropften Einheiten von 22 % Acrylnitril und 58 % Styrol besteht.

Das Styrolpolymerisat PS ist ein handelsübliches schlagzähes Polystyrol, das aus 6 % Polybutadienkautschuk als Pfropfgrundlage und 94 % aufgepfropften Styroleinheiten aufgebaut ist.

Die in den Tabellen 1 und 2 aufgeführten Formassen wurden aus den angegebenen Teilen der einzelnen Komponenten durch Verschmelzen und Homogenisieren in einem Extruder bei 220 °C, Abkühlen auf Raumtemperatur und Granulieren hergestellt. Aus den Granulaten wurden die Teststäbe durch Spritzgießen hergestellt.

An den Prüfkörpern wurden die Schlagzähigkeit $a_n$ und die Kerbschlagzähigkeit $a_k$ jeweils in $kJ/m^2$ gemäß DIN 53 453 gemessen. Die Bestimmung der Sauerstoffindex OI erfolgt gemäß ASTM-D 2863-70 in % und das Brandverhalten gemäß dem in der Beschreibung spezifizierten UL-Testverfahren an 127 × 12,7 × 3,2 bzw. 127 × 12,7 × 2,5 mm starken Teststäben. Aus den Tabellen 1 und 2 ist ersichtlich, daß Formkörper aus den erfindungsgemäßen Formmassen bezüglich ihres Brandverhaltens als flammhemmend (VO, VI) einzuordnen sind, während Formkörper mit Octabromdiphenylether allein oder in Kombination mit Triphenylphosphat als Flammschutzzusatz selbst bei höherer Dicke nicht selbstverlöschend sind.

(Siehe Tabellen Seite 7 ff.)

Tabelle 1

Formmassen gemäß Erfindung

| Styrolpolymerisat (Tle) | Polyphosphonsäureamid Formel A (Tle) | Octabromdiphenylether (Tle) | Vicat B °C | Schlagzähigkeit $a_n$ [kJ/m²] | Kerbschlagzähigkeit $a_k$ [kJ/m²] | Sauerstoffindex % | Brandverhalten UL-94 2,5 mm |
|---|---|---|---|---|---|---|---|
| ABS | | | | | | | |
| 100 | 6 | 24 | 101 | 70 | 7 | 26 | VO |
| 100 | 10 | 18 | 100 | 60 | 6 | 26 | VI |
| 100 | 12 | 18 | 100 | 60 | 5 | 26,5 | VO |
| PS | | | | | | | |
| 100 | 10 | 22 | 85 | - | - | - | VO |
| ASA | | | | | | | |
| 100 | 10 | 22 | 90 | 50 | 3 | - | VO |
| ABS | Polyphosphonsäureamid Formel B | | | | | | |
| 100 | 12 | 18 | 95 | | 6,7 | 27,5 | VO |

Tabelle 2

Formmassen (Vergleich, nicht erfindungsgemäß)

| Styrolpolymerisat (Tle) | Octabromdiphenylether (Tle) | Triphenylphosphat (Tle) | Vicat B (°C) | Brandverhalten UL-94 3,2 mm |
|---|---|---|---|---|
| ABS | | | | |
| 100 | 18 | - | - | brennt |
| 100 | 26 | - | - | brennt |
| 100 | 18 | 8 | 80 | brennt |
| 100 | 18 | 12 | 75 | brennt |
| ASA | | | | |
| 100 | 22 | - | 91 | brennt |
| PS | | | | |
| 100 | 18 | - | - | brennt |
| 100 | 26 | - | - | brennt |

**Patentansprüche**

1. Schwer entflammbare Formmassen aus Mischungen von

a) 50-90 Gew.-Teilen Styrolpolymerisat

b) 10-50 Gew.-Teilen Flammschutzzusatz, die Summe aus a) + b) ist 100, und gegebenenfalls

c) üblichen Zusatzstoffen in üblichen Mengen,

dadurch gekennzeichnet, daß die 10-50 Gew.-Teile Flammschutzzusatz bestehen aus

$b_1$) 5-30 Gew.-Teilen mindestens eines mindestens 4 C-Atome und 30 Gew.-% Chlor und/oder mindestens 4 C-Atome und 40 Gew.-% Brom enthaltenden organischen, üblichen Flammmschutzmittels und

$b_2$) 5-20 Gew.-Teilen mindestens eines Polyphosphonsäureamids mit den wiederkehrenden Struktureinheiten der Formel I

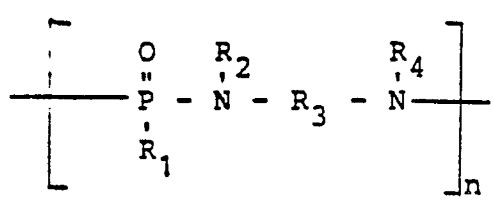

(I)

worin

$R_1$ = $C_1$-$C_6$-Alkyl, $C_6$-$C_{15}$-Aryl, $C_2$-$C_{12}$-Alkenyl, $C_7$-$C_{18}$-Alkylaryl, $C_7$-$C_{18}$-Aralkyl,

$R_3$ = einen oder mehrere Reste, ausgewählt aus

$C_2$-$C_{12}$-Alkylen ;

Phenylen 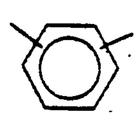

Bisphenylen 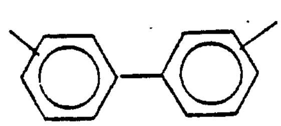

Alkylen-bisphenylen 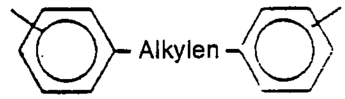

mit
Alkylen = $C_1$-$C_4$-Alkylen,
$C_2$-$C_4$-Alkyliden,
$C_5$-$C_{12}$-Cycloalkylen oder
$C_6$-$C_{12}$-Cycloalkyliden ;

Thiobisphenylen 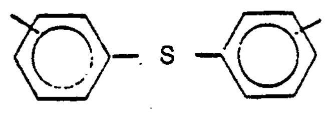

Oxybisphenylen 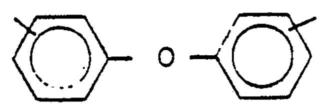

Sulfonyl-bisphenylen 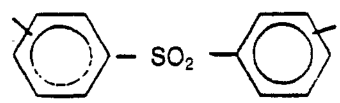

Carbonyl-bisphenylen 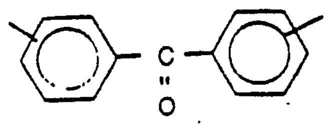

Bis(alkylen)-phenylen Alkylen 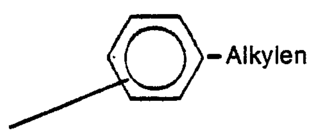

mit 1-4 C-Atomen in jeder Alkylengruppe, wobei jeder der Phenylkerne der $R_1$- und $R_3$-Reste durch 1-4 $C_1$-$C_4$-Alkylgruppen, oder 1-4 Halogenatome (Cl, Br) oder durch die genannten Alkylgruppen und Halogenatome substituiert sein kann,

$R_2$ = $R_4$ = Wasserstoff oder $C_1$-$C_4$-Alkyl bzw.

$R_2$ und $R_4$ zusammen eine die beiden Stickstoffatome verbindende Alkylengruppe mit 1 bis 6 C-Atomen, wobei dann $R_3$ auf Alkylen mit 2 bis 6 C-Atomen beschränkt ist und

n eine Zahl von 3 bis 20 bedeuten ;

die Summe der Gewichtsteile aus $b_1$ und $b_2$ ist stets eine Zahl von 10 bis 50.

2. Schwer entflammbare Formmassen gemäß Anspruch 1, dadurch gekennzeichnet, daß

$R_1$ = Methyl,

$R_2$ und $R_4$ = Wasserstoff, bzw. $R_2$ und $R_4$ zusammen eine $-CH_2-CH_2$-Gruppe, wobei dann $R_3$ auf eine $CH_2-CH_2$-Gruppe beschränkt ist ;

$R_3$ mindestens einen der Reste

Phenylen 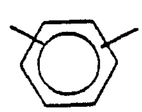

Alkylenbisphenylen 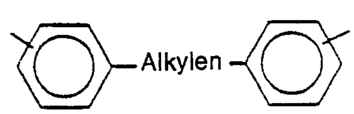

mit Alkylen = $C_1$-$C_4$-Alkylen, insbesondere $C_1$-$C_2$-Alkylen und

Xylylen

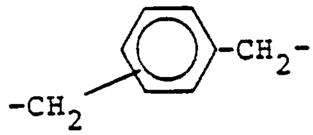

wobei jeder Phenylkern von $R_1$ und $R_3$ durch 1 bis 2 Methylreste substituiert sein kann und n eine Zahl von 3 bis 15 bedeuten.

**Claims**

1. Flame-retardant moulding compositions of mixture of
   a) 50 to 90 parts by weight styrene polymer,
   b) 10 to 50 parts by weight flameproofing additive, the sum of a) + b) being 100, and optionally
   c) standard additives in the usual quantities,

characterized in that the 10 to 50 parts by weight of flameproofing additive consist of

$b_1$) 5 to 30 parts by weight of at least one standard organic flameproofing agent containing at least 4 C atoms and 30 % by weight chlorine and/or at least 4 C atoms and 40 % by weight bromine and

$b_2$) 5 to 20 parts by weight of at least one polyphosphonic acid amide containing recurring structural units corresponding to formula I

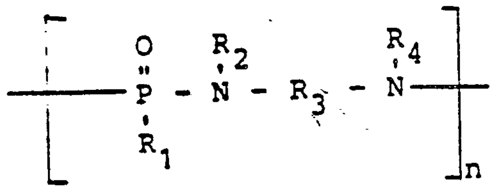 (I)

in which

$R_1$ = $C_1$-$C_6$-alkyl, $C_6$-$C_{15}$ aryl, $C_2$-$C_{12}$ alkenyl, $C_7$-$C_{18}$ alkylaryl, $C_7$-$C_{18}$ aralkyl,
$R_3$ = one or more substituents selected from $C_2$-$C_{12}$ alkylene

phenylene 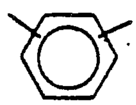 ,

bisphenylene 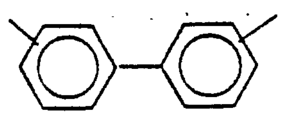

alkylene bisphenylene 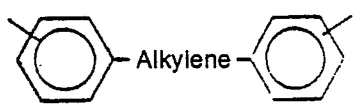

with
alkylene = $C_1$-$C_4$ alkylene,
$C_2$-$C_4$ alkylidene,
$C_5$-$C_{12}$ cycloalkylene or
$C_6$-$C_{12}$ cycloalkylidene ;

thiobisphenylene 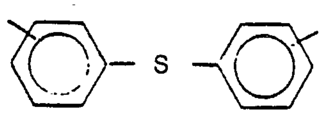

hydroxybisphenylene 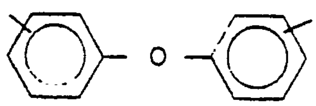

sulfonyl bisphenylene 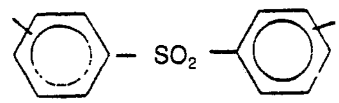

carbonyl bisphenylene 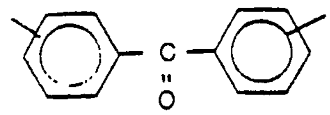

bis(alkylene) phenylene alkylene 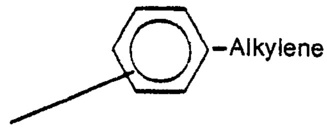

containing 1 to 4 C atoms in each alkylene group, each of the phenyl nuclei of the substituents $R_1$ and $R_3$ optionally being substituted by 1 to 4 $C_1$-$C_4$ alkyl groups or 1 to 4 halogen atoms (Cl, Br) or by the above-mentioned alkyl groups and halogen atoms,

$R_2 = R_4$ = hydrogen or $C_1$-$C_4$ alkyl or

$R_2$ and $R_4$ together represent a $C_1$-$C_6$ alkylene group joining the two nitrogen atoms, in which case $R_3$ is limited to $C_2$-$C_6$ alkylene and

n is a number of from 3 to 20 ;

the sum of the parts by weight of $b_1$ and $b_2$ always being a number of from 10 to 50.

2. Flame-retardant moulding compositions as claimed in claim 1, characterized in that

$R_1$ = methyl,

$R_2$ and $R_4$ = hydrogen or $R_2$ and $R_4$ together form a $—CH_2—CH_2$ group, in which case $R_3$ is limited to a $CH_2—CH_2$ group ;

$R_3$ represents at least one of the radicals

phenylene 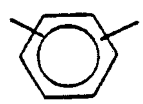

alkylenebisphenylene 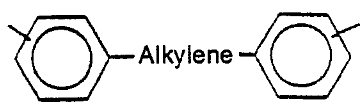

with alkylene = $C_1$-$C_4$ alkylene, particularly $C_1$-$C_2$ alkylene and xylylene

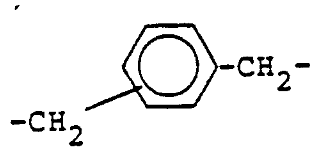

each phenyl nucleus of $R_1$ and $R_3$ optionally being substituted by 1 to 2 methyl groups, and

n is a number of 3 to 15.

**Revendications**

1. Matières à mouler difficilement inflammables composées de mélanges de

a) 50 à 90 parties en poids de polymère de styrène,

b) 10 à 50 parties en poids d'un additif ignifuge, la somme de a) et b) étant 100, et éventuellement

c) d'additifs usuels dans les quantités habituelles,

caractérisées en ce que les 10 à 50 parties en poids d'additif ignifuge se composent de

$b_1$) 5 à 30 parties en poids d'au moins un agent ignifuge organique usuel contenant au moins 4 atomes de carbone et 30 % en poids de chlore et/ou au moins 4 atomes de carbone et 40 % en poids de brome et

$b_2$) 5 à 20 parties en poids d'au moins un amide d'acide polyphosphonique avec les unités structurelles récurrentes de formule I

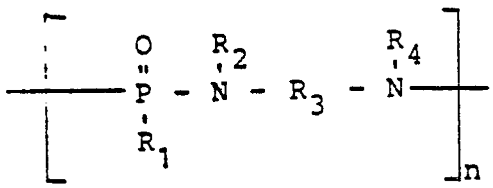 (I)

dans laquelle

$R_1$ = $C_1$-$C_6$-alkyle, $C_6$-$C_{15}$-aryle, $C_2$-$C_{12}$-alcényle, $C_7$-$C_{18}$-alkylaryle, $C_7$-$C_{18}$-aralkyle,

$R_3$ = un ou plusieurs restes, sélectionnés de $C_2$-$C_{12}$-alkylène ;

phénylène 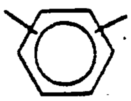 ,

bisphénylène 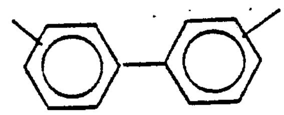 ,

alkylène-bisphénylène 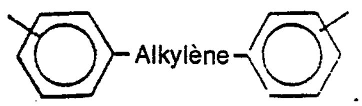

avec

alkylène = $C_1$-$C_4$-alkylène,
$C_2$-$C_4$-alkylidène,
$C_5$-$C_{12}$-cycloalkylène ou
$C_6$-$C_{12}$-cycloalkylidène ;

thiobisphénylène 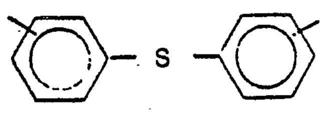

oxybisphénylène 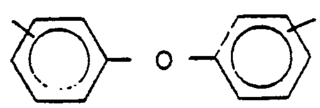

sulfonyl-bisphénylène 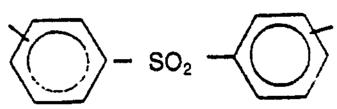

carbonyl-bisphénylène 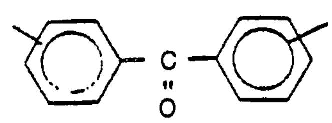

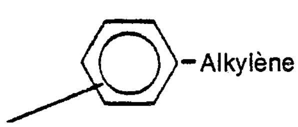

bis(alkylène)-phénylène, alkylène avec 1 à 4 atomes de carbone dans chaque groupe alkylène, chacun des noyaux de phényle des restes $R_1$ et $R_3$ pouvant être substitué par 1 à 4 groupes $C_1$-$C_4$-alkyle ou par 1 à 4 atomes d'halogène (Cl, Br) ou par les groupes alkyles et les atomes d'halogène mentionnés,

$R_2$ = $R_4$ représentent l'hydrogène ou un groupe $C_1$-$C_4$-alkyle, ou

$R_2$ et $R_4$ représentant ensemble un groupe alkylène avec 1 à 6 atomes de carbone reliant les deux atomes d'azote, $R_3$ étant alors limité à l'alkylène avec 2 à 6 atomes de carbone, et

n représente un chiffre de 3 à 20 ;

la somme des parties en poids de $b_1$ et $b_2$ étant toujours un chiffre de 10 à 50.

2. Matières à mouler difficilement inflammables selon la revendication 1, caractérisées en ce que $R_1$ représente le méthyle,

$R_2$ et $R_4$ représentent l'hydrogène, ou $R_2$ et $R_4$ représentent ensemble un groupe $CH_2—CH_2$, $R_3$ étant alors limité à un groupe $CH_2—CH_2$ ;

$R_3$ représente au moins un des restes

phénylène

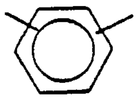

alkylènebisphénylène

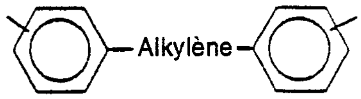


avec alkylène = $C_1$-$C_4$-alkylène, en particulier $C_1$-$C_2$-alkylène, et

xylylène

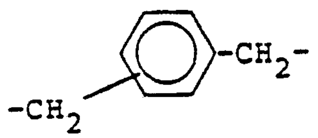


chaque noyau phényle de $R_1$ et $R_3$ pouvant être substitué par 1 à 2 restes de méthyle, et n représente un chiffre de 3 à 15.